# EUROPÄISCHE PATENTSCHRIFT

(11) **EP 2 490 784 B1**
(45) Veröffentlichungstag und Bekanntmachung des Hinweises auf die Patenterteilung: **04.01.2017**
(21) Anmeldenummer: 10755109.5
(22) Anmeldetag: 14.09.2010
(51) Int. Cl.: B01D 29/21, B01D 35/147, B01D 35/06

(54) **FILTERVORRICHTUNG SOWIE FILTERELEMENT FÜR DEN EINSATZ BEI EINER SOLCHEN FILTERVORRICHTUNG**
FILTER DEVICE AND FILTER ELEMENT FOR USE WITH SUCH A FILTER DEVICE
DISPOSITIF DE FILTRATION ET ÉLÉMENT FILTRANT À UTILISER DANS UN TEL DISPOSITIF DE FILTRATION

(30) Priorität: 24.10.2009 DE 102009050587
(43) Veröffentlichungstag der Anmeldung: 29.08.2012
(73) Patentinhaber: Hydac Filtertechnik GmbH, 66280 Sulzbach/Saar (DE)
(72) Erfinder: SANN, Norbert, 66292 Riegelsberg (DE); BACKES, Volker, 66646 Marpingen (DE)
(74) Vertreter: Bartels, Martin Erich Arthur
(86) Internationale Anmeldenummer: PCT/EP2010/005630
(87) Internationale Veröffentlichungsnummer: WO 2011/047754

(56) Entgegenhaltungen:
- WO-A1-02/062447
- DE-A1-102006 034 943
- US-A- 4 299 699
- US-A1- 2006 054 547
- US-A1- 2009 134 087
- US-A1- 2010 025 317

## Beschreibung

Die Erfindung betrifft eine Filtervorrichtung mit den Merkmalen im Oberbegriff von Anspruch 1. Außerdem betrifft die Erfindung ein Filterelement für eine derartige Filtervorrichtung mit den Merkmalen im Oberbegriff von Anspruch 7.

Filtervorrichtungen dieser Art sind in verschiedenen Bauformen im Handel frei erhältlich. In großem Umfang werden derartige Filtervorrichtungen zur Filtration von Arbeitsfluiden, wie Hydraulikflüssigkeiten, Kraftstoffen, Schmierstoffen und dergleichen, eingesetzt. Bei Fluidsystemen, namentlich Hydrauliksystemen, bei denen Filtervorrichtungen zum Einsatz kommen, hängt die Betriebssicherheit des Systems in hohem Maße von der sicheren Funktion der im System befindlichen Filtervorrichtungen ab. Mit anderen Worten gesagt, kann ein Versagen der Filtervorrichtung über den Ausfall des zugehörigen Systems hinaus zu einer schwerwiegenden Beschädigung des Systems führen und dadurch hohe wirtschaftliche Schäden verursachen.

DE 10 2005 045 012 A1 betrifft eine gattungsgemäße Filtervorrichtung mit einem Gehäuse zur Aufnahme eines Filterelements aus mindestens zwei miteinander lösbar zu verbindenden Gehäuseteilen, einem Stützrohr sowie ein das Stützrohr umgebendes Filtermaterial, wobei die Enden von Stützrohr und Filtermaterial in mindestens ein Aufnahmeteil münden. Das Filtermaterial läßt sich in-einer Richtung vom Stützrohr trennend abziehen und in dieser Abziehrichtung sind sowohl das Stützrohr als auch gleichermaßen das Filtermaterial mit einer vorgebbaren Konizität versehen, wodurch das verschmutzte Filtermaterial ohne weiteres von dem Stützrohr abgezogen werden kann. Das Stützrohr ist in Verbindung mit einem neu eingesetzten Filtermaterial samt seiner Aufnahmeteile wiederverwendbar. Die Aufnahmeteile für das Filtermaterial bilden Endkappen aus und es ergibt sich ein nahtloser Übergang zwischen dem Filtermaterial und der derart gebildeten Abstützung durch die anformbaren Endkappen in Form eines oberen Aufnahmeteils und eines unteren Aufnahmeteils. Die Enden des Stützrohres sind in eigenständigen Aufnahmeteilen gehalten. In Längsrichtung des Gehäuses gesehen ist das Filtermaterial mit seinen Aufnahmeteilen axial länger aufgebaut als das innenliegende Stützrohr.

Mit der bekannten Lösung ist sichergestellt, dass nur spezielle, auf die Filtervorrichtung und ihren Betrieb ausgelegte Filterelemente im Bedarfsfall in das Filtergehäuse eingewechselt werden können; allein aufgrund des Fehlens einer Fluidanschluss-Stelle im Bereich der Verbindung von Element und Elementaufnahme ist innerhalb des Filtergehäuses eine aufwändigere Fluidführung notwendig, was grundsätzlich die Funktionssicherheit beeinträchtigt.

Die DE 10 2006 034 943 A1 beschreibt ein Filtersystem für Fluide, mit einem Fluidbehälter und einem in diesen einbaubaren Filterelement mit einem Stützrohr. Das Stützrohr bildet an seinem Ende einen durch die Endkappe geschlossen inneren Fluidraum. An der Endkappe des Filterelementes ist ein Zentrierteil vorhanden, das mit einem Positionierteil einer Wand des Fluidbehälters zusammenwirkt. Dadurch wird das in den Fluidbehälter eingebaute Filterelement zentriert und eine einwandfreie Lagesicherung des Filterelementes erreicht.

Die US 4 299 699 zeigt eine gattungsgemäße Filtervorrichtung mit mindestens einem Filtergehäuse, in dem mindestens ein eine Längsachse definierendes Filterelement in Form einer Filterpatrone aufnehmbar ist, die an zumindest einem Ende eine eine Einfassung für den betreffenden Endrand des Filtermaterials bildende Endkappe aufweist, die zur Lagefixierung des Filterelementes in seiner Funktionsposition an einer, mit dem Bodenteil des Filtergehäuses zusammenwirkenden Elementaufnahme festlegbar ist, wobei die Elementaufnahme und die zugeordnete Endkappe des Filterelementes an ihrem, bei der Funktionsposition des Filterelementes miteinander in Eingriff kommenden Teilen mit aneinander angepassten Gestaltsunregelmäßigkeiten versehen sind, die in aufeinander ausgerichteter Lagebeziehung den Eingriff ermöglicht, wobei die Elementaufnahme eine von ihrer Oberseite vorspringenden Rohrstutzen besitzt, der sich zur Bildung einer Fluidverbindung in einem inneren Filterhohlraum des in der Funktionsposition befindlichen Filterelementes erstreckt, und wobei der Rohrstutzen als der Elementaufnahme zugehörige Gestaltsunregelmäßigkeit eine von der Kreisform abweichende symmetrische Außenkontur besitzt.

Bei der bekannten Lösung ist die Endkappe sowohl außenumfangsseitig als auch innenumfangsseitig im Bereich der Fluidführung der Filtervorrichtung mit Gestaltsunregelmäßigkeiten in Form einer Verzahnung oder Kerben vorsehen, die mit korrespondierenden, als Verzahnung oder Kerben ausgebildeten, weiteren Gestaltsunregelmäßigkeiten an der rohrstutzenartigen Elementaufnahme des Filterelementes in Eingriff bringbar sind.

Die US 2006/0054547 A1 beschreibt einen Kraftstofffilter, wobei ein Filtermedium an seinen Enden von jeweils einer Endkappe begrenzt ist. An einer der Endkappen ist eine Scheibe vorgesehen, an der kreisförmig in axialer Richtung Zähne abstehen, die bei der Montage des Filterelementes in einem Gehäuse in Eingriff mit einer Verschlusshülse gelangen, und diese axial an einem Stützrohr verschieben, um eine Fluidöffnung freizugeben oder zu verschließen. Die Zähne haben eine einheitliche Formgebung und greifen nicht in komplementär zu diesen geformte Teile ein, sondern liegen im montierten Zustand des Filterelementes an einem glatten, kreisringförmigen Ende der Verschlusshülse an.

Im Hinblick auf diese Problematik stellt sich die Erfindung die Aufgabe, eine Filtervorrichtung zur Verfügung zu stellen, die sich durch besondere Funktionssicherheit auszeichnet.

Erfindungsgemäß ist diese Aufgabe durch eine Filtervorrichtung gelöst, die die Merkmale des Patentanspruches 1 in seiner Gesamtheit aufweist, sowie durch ein Filterelement mit den Merkmalen,des Patentanspruches 7. Gemäß dem kennzeichnenden Teil des Anspruches 1 besteht eine wesentliche Besonderheit der Filtervorrichtung darin, dass die Außenkontur des Rohrstutzens asymmetrisch geformt ist.

Es ist ferner vorgesehen, dass sowohl an der Elementaufnahme am Bodenteil des Filtergehäuses als auch an Teilen der der Elementaufnahme zugeordneten Endkappe des Filterelementes Gestaltsunregelmäßigkeiten ausgebildet sind, wobei die Gestaltsunregelmäßigkeiten an der Elementaufnahme und an der Endkappe derart aneinander angepasst sind, dass, sie wenn sie aufeinander ausgerichtet sind, den gegenseitigen Eingriff ermöglichen. Dadurch kann ein betreffendes Filterelement nur unter der Voraussetzung in die Funktionsposition verbracht werden, das komplementäre Gestaltsmerkmale an Elementaufnahme und Endkappe derart aneinander angepasst sind, dass sie bei entsprechender, gegenseitiger Ausrichtung den Eingriff zulassen. Somit ist sichergestellt, dass die Filtervorrichtung ausschließlich mit einem Filterelement betreibbar ist, das für einen jeweiligen, speziellen Einsatz vorgesehen ist und die hierfür geltenden, die Betriebssicherheit gewährleistenden Spezifikationen erfüllt.

Somit ist nicht nur ausgeschlossen, dass ein für den jeweiligen Einsatzzweck ungeeignetes, also nicht einer entsprechenden Druckstufe zugeordnetes oder eine ungeeignete Filterfeinheit aufweisendes Filterelement zum Einsatz kommt, sondern es ist auch die Gefahr vermieden, dass gegebenenfalls ein sogenanntes, auf dem Markt befindliches "Billigelement" zum Einsatz gebracht wird, das die geltenden Sicherheitsstandards nicht erfüllt. Die Elementaufnahme besitzt den von ihrer Oberseite vorspringenden Rohrstutzen, der sich zur Bildung der Fluidverbindung in den inneren Filterhohlraum des in der Funktionsposition befindlichen Filterelementes erstreckt, wobei der Rohrstutzen als der Elementaufnahme zugehörige Gestaltsunregelmäßigkeit die von der Kreisform abweichende Außenkontur besitzt, wobei es sich um die asymmetrische Formgebung handelt.

Die Endkappe des Filterelementes weist einen Anschlussstutzen auf, der sich in einen von einem fluiddurchlässigen Stützrohr umgebenen inneren Filterhohlraum des Filterelementes hinein erstreckt und in den der Rohrstutzen der Elementaufnahme bei der Funktionsposition des Filterelementes eingreift, wobei als an der Endkappe zugehörige Gestaltsunregelmäßigkeit der Öffnungsquerschnitt des Anschlussstutzens der unrunden Außenkontur des Rohrstutzens der Elementaufnahme angepasst ist.

Bei besonders vorteilhaften Ausführungsbeispielen, bei denen der Rohrstutzen an seiner Außenkontur eine ihn gegen sein freies Ende hin verjüngende Seitenfläche in der Art einer Kegelfläche aufweist, gestalten sich Wechselvorgänge der Filterelemente besonders einfach und bequem, weil die konische Formgebung des Rohrstutzens an der Elementaufnahme den Eingriff in den Anschlussstutzen des einzusetzenden Filterelementes erleichtert.

Hinsichtlich der Formgebung der aneinander angepassten Konturen kann so vorgegangen werden, dass die Außenkontur des Rohrstutzens und der Öffnungsquerschnitt des Anschlussstutzens je einen Abschnitt in Form eines zur Längsachse konzentrischen Teilkreises und einen demgegenüber der Längsachse näherliegenden gewellten Abschnitt aufweisen.

Da für das Ermöglichen des gegenseitigen Eingriffes zwischen Endkappe und Elementaufnahme eine vorgegebene Lagebeziehung erforderlich ist, bei der die Gestaltsunregelmäßigkeiten eine zueinander ausgerichtete Lage einnehmen, ergibt sich der zusätzliche Vorteil, dass der Eingriff eine Verdrehsicherung bildet, so dass auch bei einer im Filtergehäuse gegebenenfalls auftretenden Tangentialströmung das Filterelement gegen ein mögliches Drehmoment um die Längsachse gesichert ist.

Durch die vorgegebene Drehposition des Filterelementes im Filtergehäuse eröffnet sich zudem die weitere vorteilhafte Möglichkeit, bei einem Filtergehäuse, das einen seitlichen, der Endkappe des in Funktionsposition befindlichen Filterelementes benachbarten Fluideinlass aufweist, ein Abschirmteil an der Endkappe vorzusehen, das sich entlang der Außenseite des Filtermaterials des Filterelementes erstreckt und bei der Funktionsposition des Filterelementes als Prallschutz den Bereich des Fluideinlasses überdeckt. Durch die festgelegte Drehposition ist sichergestellt, dass sich der Prallschutz im Anströmbereich des Filterelementes befindet. In vorteilhafter Weise kann hierbei an der dem Abschirmteil entgegengesetzten Seite der Endkappe ein Fangmagnet angeordnet werden, der, da er sich im Leebereich befindet, gegen direkte Anströmung geschützt ist.
- Fig. 1: einen Längsschnitt einer Filtervorrichtung, wobei der Zustand dargestellt ist, bei dem sich ein für die Benutzung geeignetes Filterelement im Filtergehäuse in der Funktionsposition befindet;
- Fig. 2: eine gegenüber Fig. 1 in größerem Maßstab gezeichnete, perspektivische Schrägansicht der gesondert dargestellten Elementaufnahme und
- Fig. 3: eine gegenüber Fig. 2 und gegenüber einer praktischen Ausführungsform verkleinert dargestellte perspektivische Schrägansicht, gesehen auf die Endkappe, eines Filterelementes.

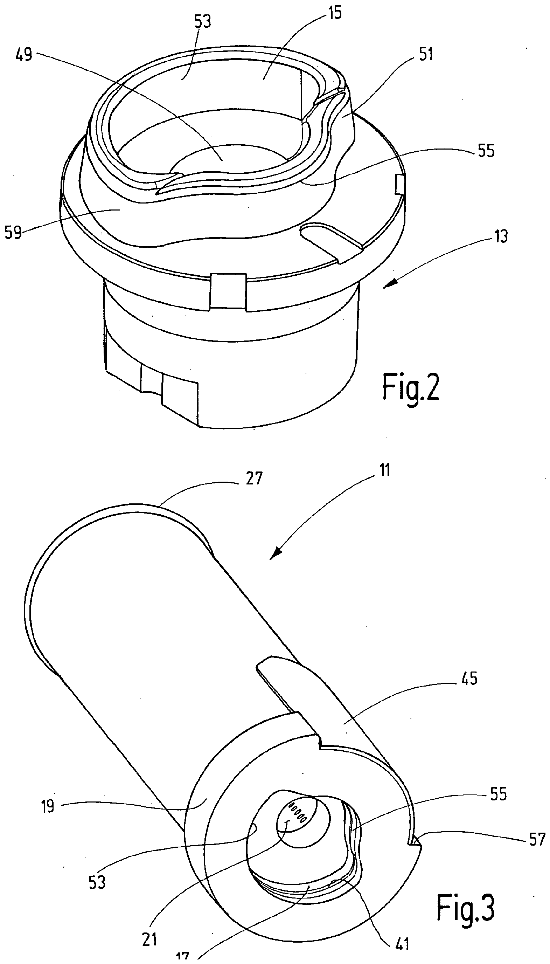

Ein als Ganzes mit 1 bezeichnetes, hohlzylinderförmiges Filtergehäuse weist ein Oberteil 3, ein Mittelteil 5 und ein Bodenteil 7 auf, die miteinander verschraubt sind. Insbesondere das Mittelteil 5 und das Bodenteil 7 können aber auch einteilig ausgebildet sein. Das dem Bodenteil 7 entgegengesetzte obere Ende des Oberteiles 3 ist durch einen verschraubten Gehäusedeckel 9 verschließbar. Im Gehäuse 1 ist ein als Ganzes mit 11 bezeichnetes Filterelement koaxial zur Längsachse des Gehäuses 1 aufnehmbar. Zur Positionierung und Lagefixierung befindet sich am Bodenteil 7 eine Elementaufnahme 13 in Form eines in Fig. 2 gesondert dargestellten Hohlkörpers, an dessen dem Filterelement 11 zugewandter Oberseite sich ein speziell geformter Rohrstutzen 15 befindet. Für die eigentliche Positionierung des Filterelementes 11 wirkt dieser Rohrstutzen 15 mit einem Anschlussstutzen 17 zusammen, der sich an der dem Bodenteil 7 zugewandten Endkappe 19 des Filterelementes 11 befindet. Der Anschlussstutzen 17 bildet eine Fluidverbindung zu einem inneren Filterhohlraum 21 innerhalb des Filterelementes 11, der beim Filtrationsvorgang die Reinseite bildet.

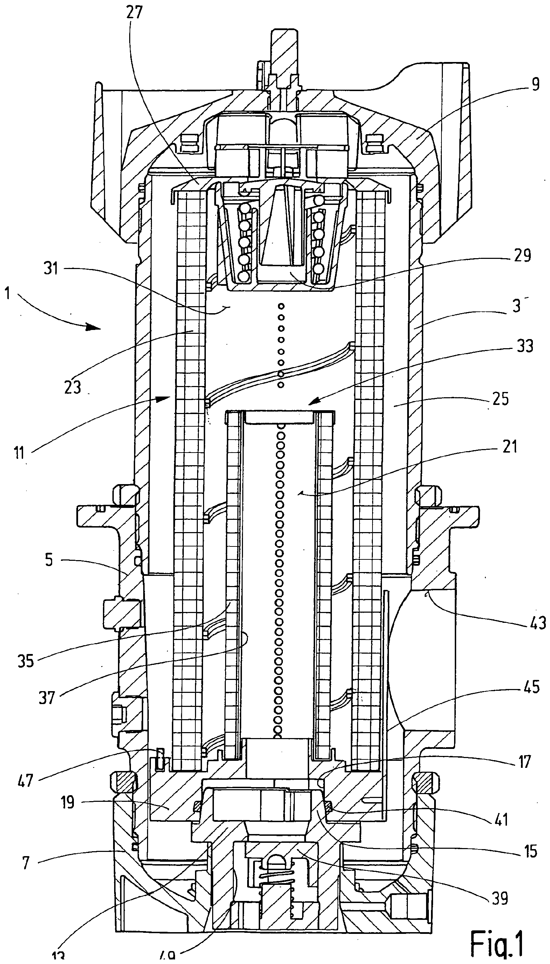

Bei der Darstellung von Fig. 1 ist das Filterelement 11 als Zwei-Stufenelement ausgeführt, wobei ein sich an der Außenseite des Filterelementes 11 erstreckendes Filtermaterial 23 gröberer Filterfeinheit außenseitig an den beim Filtrationsvorgang die Schmutzseite bildenden, äußeren Gehäuseraum 25 angrenzt und ein Vorfilter bildet. Der untere Rand des Filtermaterials 23 ist bodenseitig von der Endkappe 19 eingefasst. Das obere Ende des Filtermaterials 23 ist von einer oberen Deckkappe 27 eingefasst, an der eine Bypassventilanordnung 29 vorgesehen ist, die bei einem vorgegebenen, schmutzseitigen Druckniveau einen Durchstrom vom Raum 25 zum Vorfiltrationsraum 31 an der Innenseite des Filtermaterials 23 ermöglicht. Bei der zweistufigen Ausbildung des Filterelementes 11 ist der Vorfiltrationsraum 31 nicht unmittelbar mit dem Anschlussstutzen 17 der Endkappe 19 in Verbindung, sondern dem Anschlussstutzen 17 vorgeschaltet befindet sich eine Feinfiltereinheit 33 mit einem Filtermaterial 35 größerer Filterfeinheit, das ein fluiddurchlässiges Stützrohr 37 umgibt, das zum Anschlussstutzen 17 der Endkappe 19 offen ist und zusammen mit dem unteren Rand des Filtermaterials 35 an der Außenseite des Anschlussstutzens 17 von der Endkappe 19 eingefasst ist. Somit ist der beim Filtrationsvorgang der die Reinseite bildende Raum 21 über den Anschlussstutzen 17 mit dem Rohrstutzen 15 der Elementaufnahme 13 in Verbindung, aus deren Unterseite das abgereinigte Fluid über ein federbelastetes Bodenventil 39 austreten kann. An der für den Eingriff des Rohrstutzens 15 vorgesehenen Innenseite des Anschlussstutzens 17 befindet sich eine Dichtungsanordnung mit einem O-Ring 41, um bei der Funktionsposition die Abdichtung zwischen Anschlussstutzen 17 und Außenseite des Rohrstutzens 15 herzustellen.

Bei dem in Fig. 1 gezeigten Ausführungsbeispiel befindet sich der Fluideinlass 43 zum schmutzseitigen Raum 25 am Gehäusemittelteil 5 in der Nähe der Endkappe 19 des in der Funktionsposition befindlichen Filterelementes 11. Als Prallschutz ist an der Außenseite der Endkappe 19 in dem dem Einlass 43 zugewandten Umfangsbereich des Filterelementes 11 eine Abschirmplatte 45 angebracht, die sich im betreffenden Umfangsbereich gewölbt entlang der Außenseite des äußeren Filtermaterials 23 erstreckt. In dem vom Anströmbereich abgekehrten, dem Fluideinlass 43 entgegengesetzten Leebereich, in dem ein strömungsberuhigter Schmutzauffangkorb gebildet ist, befindet sich ein Fangmagnet 47.

Wie oben bereits ausgeführt, ist durch Gestaltsunregelmäßigkeiten an den bei der Funktionsposition zusammenwirkenden Teilen der Elementaufnahme 13 und der bodenseitigen Endkappe 19 des Filterelementes 11 sichergestellt, dass lediglich ein bestimmungsgemäßes Filterelement 11 in die Funktionsposition gebracht werden kann und dass in der Funktionsposition eine Drehposition des Filterelementes 11 vorgegeben ist, bei der das Filterelement 11 einerseits verdrehsicher gehalten und andererseits sichergestellt ist, dass sich die Abschirmplatte 45 als Prallschutz im Anströmbereich und der Fangmagnet 47 im Leebereich befinden.

Die Fig. 2 und 3 zeigen, dass zu diesem Zweck der Rohrstutzen 15 der Elementaufnahme 13, der den zum Bodenventil 39 führenden inneren Durchgang 49 der Elementaufnahme 13 umgibt, eine von der Kreisform abweichende Gestalt besitzt, nämlich dergestalt, dass die Außenkontur 51 asymmetrisch gestaltet ist. Wie am besten aus Fig. 2 zu ersehen ist, weist diese Kontur einen Abschnitt 53 in Form eines Teilkreisbogens, der zur Längsachse konzentrisch ist, und einen Abschnitt 55 auf, der an der Elementaufnahme 13 radial weiter einwärts gelegen ist und eine wellige Form besitzt. Hierzu komplementär, wie Fig. 3 zeigt, weist der Öffnungsquerschnitt des Anschlussstutzens 17 die hierzu passende Formgebung mit dem kreisbogenförmigen Abschnitt 53 und dem gewellten Abschnitt 55 auf, also eine passende Formgebung, bei der durch den O-Ring 41 oder eine sonstige Formdichtung am Anschlussstutzen 17 eine vollumfängliche Abdichtung an der Außenkontur des Rohrstutzens 15 bei der Funktionsposition gegeben ist. Wie Fig. 3 zeigt, ist die den Prallschutz bildende Abschirmplatte 45 an der Endkappe 19 in einer umfänglichen Randvertiefung 57 angebracht, beispielsweise durch Einkleben der gegebenenfalls aus einem Kunststoffmaterial gefertigten Platte 45 in die Vertiefung 57 der ebenfalls aus Kunststoff gefertigten Endkappe 19.

Wie Fig. 1 und 2 zeigen, ist der Rohrstutzen 15 gegen sein freies Ende hin leicht konisch verjüngt, weil die Seitenfläche 59 zur Längsachse leicht geneigt ist. Bei einem Filterelementwechsel gestaltet sich somit das Zusammenfahren von Anschlussstutzen 17 und Rohrstutzen 15 leicht und bequem, ohne dass die Gefahr einer Beschädigung des O-Ringes 41 besteht.

## Patentansprüche

1. Filtervorrichtung mit mindestens einem Filtergehäuse (1), in dem mindestens ein eine Längsachse definierendes Filterelement (11) in Form einer Filterpatrone aufnehmbar ist, die an zumindest einem Ende eine eine Einfassung für den betreffenden Endrand des Filtermaterials (23, 25) bildende Endkappe (19) aufweist, die zur Lagefixierung des Filterelementes (11) in seiner Funktionsposition an einer mit dem Bodenteil (7) des Filtergehäuses (1) zusammenwirkenden Elementaufnahme (13) festlegbar ist, wobei die Elementaufnahme (13) und die zugeordnete Endkappe (19) des Filterelementes (11) an ihren bei der Funktionsposition des Filterelements miteinander in Eingriff kommenden Teilen (17 bzw. 15) mit aneinander angepassten Gestaltsunregelmäßigkeiten (51) versehen sind, die in aufeinander ausgerichteter Lagebeziehung den Eingriff ermöglichen, wobei die Elementaufnahme (13) einen von ihrer Oberseite vorspringenden Rohrstutzen (15) besitzt, der sich zur Bildung einer Fluidverbindung in einen inneren Filterhohlraum (21) des in der Funktionsposition befindlichen Filterelementes (11) erstreckt, und wobei der Rohrstutzen (15) als der Elementaufnahme (13) zugehörige Gestaltsunregelmäßigkeit die von der Kreisform abweichende Außenkontur (51) besitzt, **dadurch gekennzeichnet, dass** die Außenkontur (51) des Rohrstutzens (15) asymmetrisch geformt ist.

2. Filtervorrichtung nach Anspruch 1, **dadurch gekennzeichnet, dass** die Endkappe (19) des Filterelementes (11) einen Anschlussstutzen (17) aufweist, der sich in einen von einem fluiddurchlässigen Stützrohr (37) umgebenen inneren Filterhohlraum (21) des Filterelementes (11) erstreckt und in den der Rohrstutzen (15) der Elementaufnahme (13) bei der Funktionsposition des Filterelementes (11) eingreift, und dass als der Endkappe (19) zugehörige Gestaltsunregelmäßigkeit der Öffnungsquerschnitt des Anschlussstutzens (17) der unrunden Außenkontur (51) des Rohrstutzens (15) der Elementaufnahme (13) angepasst ist.

3. Filtervorrichtung nachAnspruch 1 oder 2, **dadurch gekennzeichnet, dass** der Rohrstutzen (15) an seiner Außenkontur (51) eine ihn gegen sein freies Ende hin verjüngende Seitenfläche (59) in der Art einer Kegelfläche aufweist.

4. Filtervorrichtung nach Anspruch 2 oder 3, **dadurch gekennzeichnet, dass** die Außenkontur (51) des Rohrstutzens (15) und der Öffnungsquerschnitt des Anschlussstutzens (17) je einen Abschnitt (53) in Form eines zur Längsachse konzentrischen Teilkreises und einen demgegenüber der Längsachse näherliegenden gewellten Abschnitt (55) aufweisen.

5. Filtervorrichtung nach einem der Ansprüche 1 bis 4, **dadurch gekennzeichnet, dass** das Filtergehäuse (1) einen seitlichen, der Endkappe (19) des in Funktionsposition befindlichen Filterelementes (11) benachbarten Fluideinlass (43) aufweist und dass an der Endkappe (19) ein Abschirmteil (45) vorhanden ist, das sich entlang der Außenseite des Filtermaterials (23) des Filterelementes (11) erstreckt und bei der Funktionsposition des Filterelementes (11) als Prallschutz den Bereich des Fluideinlasses (43) überdeckt.

6. Filtervorrichtung nach Anspruch 5, **dadurch gekennzeichnet, dass** an der dem Abschirmteil (45) entgegengesetzten Seite der Endkappe (19) ein Fangmagnet (47) angeordnet ist.

7. Filterelement für den Einsatz bei einer Filtervorrichtung nach einem der Ansprüche 1 bis 6, das an zumindest einem Ende eine eine Einfassung für einen betreffenden Endrand des Filtermaterials (23, 35) bildende Endkappe (19) aufweist, die zur Lagefixierung des Filterelementes (11) in einer Funktionsposition an einer am Bodenteil (7) des Filtergehäuses (1) befindlichen Elementaufnahme (13) festlegbar ist, wobei die Endkappe (19) an Teilen (17), die bei der Funktionsposition mit Teilen (15) der Elementaufnahme (13) im betreffenden Filtergehäuse (1) in Eingriff kommen, mit einer Gestaltsunregelmäßigkeit versehen ist, die an die Gestaltungsregelmäßigkeit (51), die sich an Teilen (15) der Elementaufnahme (13) befindet, derart angepasst ist, dass bei aufeinander ausgerichteter Lagebeziehung der Gestaltsunregelmäßigkeiten (51) der Eingriff zwischen Endkappe (19) und Elementaufnahme (13) und damit das Verbringen des Filterelementes (11) in die Funktionsposition ermöglicht sind, wobei die Endkappe (19) einen Anschlussstutzen (17) aufweist, der sich in einen von einem fluiddurchlässigen Stützrohr (37) umgebenen inneren Filterhohlraum (21) erstreckt und in den ein Rohrstutzen (15) der Elementaufnahme (13) im Filtergehäuse (1) bei der Funktionsposition des Filterelementes (11) eingreift, und wobei als der Endkappe (19) zugehörige Gestaltsunregelmäßigkeit der Öffnungsquerschnitt des Anschlussstutzens (17) an die die Gestaltsunregelmäßigkeit der Elementaufnahme (13) bildende unrunde und asymmetrische Außenkontur (51) des Rohrstutzens (15) der Elementaufnahme (13) angepasst ist.

## Claims

1. A filter device that has at least one filter housing (1) in which at least one filter element (11) that defines a longitudinal axis can be accommodated in the form of a filter cartridge which on at least one end has an end cap (19) that forms an enclosure for the respective end edge of the filter material (23, 25) and which can be fixed on an element receiver (13) that cooperates with the bottom part (7) of the filter housing (1) in order to fix the position of the filter element (11) in its functional position, the element receiver (13) and the assigned end cap (19) of the filter element (11) being provided on their parts (17 and 15) that engage with one another in the functional position of the filter element with irregularities of shape (51) matched to one another that enable engagement when they are positioned relative to one another such as to be aligned, the element receiver (13) having a tube socket (15) projecting from its top which extends into an inner filter cavity (21) of the filter element (11) in the functional position so as to form a fluid connection, and the tube socket (15) having an outer contour (51) deviating from circular form as an irregularity of shape assigned to the element receiver (13), **characterised in that** the outer contour (51) of the tube socket (15) is formed asymmetrically.

2. The filter device according to Claim 1, **characterised in that** the end cap (19) of the filter element (11) has a connector (17) which extends into an inner filter cavity (21) of the filter element (11), which cavity is surrounded by a fluid-permeable support tube (37), and in which the tube socket (15) of the element receiver (13) engages in the functional position of the filter element (11), and that, as the irregularity of shape which is assigned to the end cap (19), the opening cross section of the connector (17) is matched to the non-circular outer contour (51) of the tube socket (15) of the element receiver (13).

3. The filter device according to Claim 1 or 2, **characterised in that** the tube socket (15) has on its outer contour (51) a side surface (59) which tapers it toward its free end in the manner of a conical surface.

4. The filter device according to Claim 2 or 3, **characterised in that** the outer contour (51) of the tube socket (15) and the opening cross-section of the connector (17) each have one section (53) in the form of a part-circle which is concentric to the longitudinal axis and a corrugated section (55) which is closer relative to the longitudinal axis.

5. The filter device according to any of Claims 1 to 4, **characterised in that** the filter housing (1) has a lateral fluid inlet (43) which is adjacent to the end cap (19) of the filter element (11) which is in the functional position, and that there is a shielding part (45) on the end cap (19) that extends along the outside of the filter material (23) of the filter element (11) and, in the functional position of the filter element (11), overlaps the region of the fluid inlet (43) as impact protection.

6. The filter device according to Claim 5, **characterised in that** a capture magnet (47) is disposed on the side of the end cap (19) opposite the shielding part (45).

7. A filter element for use in a filter device according to any of Claims 1 to 6, that on at least one end has an end cap (19) that forms an enclosure for a respective end edge of the filter material (23, 25), which end cap can be fixed on an element receiver (13) which is located on the bottom part (7) of the filter housing (1) for fixing the position of the filter element (11) in its functional position, the end cap (19) being provided on parts (17) which, in the functional position, engage with parts (15) of the element receiver (13) in the respective filter housing (1), with an irregularity of shape which is matched to the irregularity of shape (51) that is located on parts (15) of the element receiver (13) such that for a positional relationship of the irregularities of shape (51), which relationship is aligned to one another, the engagement between the end cap (19) and the element receiver (13), and so the bringing of the filter element (11) into the functional position, is enabled, the end cap (19) having a connector (17) which extends into an inner filter cavity (21) which is surrounded by a fluid-permeable support tube (37) and in which a tube socket (15) of the element receiver (13) in the filter housing (1) engages in the functional position of the filter element (11), and, as the irregularity of shape assigned to the end cap (19), the opening cross section of the connector (17) being matched to the non-circular and asymmetrical outer contour (51) of the tube socket (15) of the element receiver (13), which contour forms the irregularity of shape of the element receiver (13).

## Revendications

1. Dispositif de filtration comprenant au moins une enveloppe (1), dans laquelle peut être logé au moins un élément (11) filtrant et définissant un axe longitudinal, sous la forme d'une cartouche de filtre, qui a, à au moins une extrémité, une coiffe (19) d'extrémité formant une bordure pour le bord d'extrémité concerné de la matière (23, 25) filtrante, coiffe qui, pour l'immobilisation en position de l'élément (11) filtrant dans sa position de fonctionnement, peut être fixée à un logement (13) d'élément correspondant à la partie (7) de fond de l'enveloppe (1) du filtre, le logement (13) d'élément et la coiffe (19) d'extrémité associée de l'élément (11) filtrant étant pourvus sur leurs parties (17 et 15), venant en prise l'une avec l'autre en la position de fonctionnement de l'élément filtrant, d'irrégularités (51) de forme adaptées les unes aux autres, qui permettent, en une relation de position dirigée l'une sur l'autre, la prise, le logement (13) d'élément ayant une tubulure (15) en saillie de son côté supérieur, qui, pour la formation d'une liaison fluidique s'étend dans une cavité (21) intérieure de filtre de l'élément (11) filtrant se trouvant à la position de fonctionnement et dans lequel la tubulure (15) a, comme irrégularité de forme associée au logement (13) de l'élément, le contour (51) extérieur qui s'écarte de la forme circulaire,
**caractérisé en ce que** le contour (51) extérieur de la tubulure (15) est asymétrique.

2. Dispositif de filtration suivant la revendication 1, **caractérisé en ce que** la coiffe (19) d'extrémité de l'élément (11) filtrant a une tubulure (17) de raccordement, qui s'étend dans une cavité (21) vide intérieure de filtre de l'élément (11) filtrant entourée d'une tubulure (37) perméable au fluide et dans laquelle la tubulure (15) du logement (13)d'élément pénètre en la position de fonctionnement de l'élément (11) filtrant et **en ce que**, comme irrégularité de forme associée à la coiffe (19) d'extrémité, la section transversale d'ouverture de la tubulure (17) de raccordement est adaptée au contour (51) extérieur non circulaire de la tubulure (15) du logement (13) de l'élément.

3. Dispositif de filtration suivant la revendication 1 ou 2, **caractérisé en ce que** la tubulure (15) a sur son contour (51) extérieur une surface (59) latérale se rétrécissant vers son extrémité libre à la manière de la surface d'un cône.

4. Dispositif de filtration suivant la revendication 2 ou 3, **caractérisé en ce que** le contour (51) extérieur de la tubulure (15) et la section transversale d'ouverture de la tubulure (17) de raccordement ont chacun une partie (53) sous la forme d'un cercle partiel concentrique à l'axe longitudinal et d'une partie (53) ondulée plus proche de l'axe longitudinal que cette dernière.

5. Dispositif de filtration suivant l'une des revendications 1 à 4, **caractérisé en ce que** l'enveloppe (1) de filtre a une entrée (43) de fluide latérale et voisine de la coiffe (19) d'extrémité de l'élément (11) filtrant se trouvant à la position de fonctionnement et **en ce qu'**il y a sur la coiffe (19) d'extrémité une partie (45) de protection, qui s'étend le long du côté extérieur de la matière (23) filtrante de l'élément (11) filtrant et qui en la position de fonctionnement de l'élément (11) filtrant recouvre, comme protection vis à vis des chocs, la partie de l'entrée de fluide.

6. Dispositif de filtration suivant la revendication 5, **caractérisé en ce qu'**un aimant (47) collecteur est monté du côté de la coiffe (19) d'extrémité opposé à la partie (45) de protection.

7. Elément filtrant à utiliser dans un dispositif de filtration suivant l'une des revendications 1 à 6, qui a, à au moins une extrémité, une coiffe (19) d'extrémité formant une bordure pour un bord d'extrémité concerné de la matière (23, 35) filtrante, coiffe qui, pour l'immobilisation en position de l'élément (11) filtrant dans une position de fonctionnement, peut être fixée à un logement (13) de l'élément se trouvant sur la partie (7) de fond de l'enveloppe (1) du filtre, la coiffe (19) d'extrémité étant pourvue d'une irrégularité de forme sur des parties (17) qui, en la position de fonctionnement, viennent en prise avec des parties (15) du logement (13) de l'élément dans l'enveloppe (1) du filtre concerné, irrégularité qui est adaptée à l'irrégularité (51) de forme qui se trouve sur des parties (15) du logement (13) de l'élément, de manière à ce que, pour une relation de position dirigée l'une sur l'autre des irrégularités (51) de forme, la pénétration entre la coiffe (19) d'extrémité et le logement (13) de l'élément et ainsi la mise de l'élément (11) filtrant dans la position de fonctionnement sont possibles, la coiffe (19) d'extrémité ayant une tubulure (17) de raccordement qui s'étend dans une cavité (21) vide intérieure de filtre entourée d'une tubulure (37) perméable aux fluides et dans laquelle une tubulure (15) du logement (13) de l'élément pénètre dans l'enveloppe du filtre en la position de fonctionnement de l'élément (11) filtrant, et dans laquelle, comme irrégularité de forme associée à la coiffe (19) d'extrémité, la section transversale d'ouverture de la tubulure (17) de raccordement est adaptée au contour (51) extérieur, asymétrique et non circulaire formant l'irrégularité de forme du logement (13) de l'élément, de la tubulure (15) du logement (13) de l'élément.
